# EUROPEAN PATENT SPECIFICATION

(11) **EP 4 435 891 B1**
(45) Date of publication and mention of the grant of the patent: **07.10.2026**
(21) Application number: 22913314.5
(22) Date of filing: 20.07.2022
(51) Int. Cl.: H01M 4/485, H01M 4/583, H01M 4/587, H01M 4/36, H01M 10/0525, H01M 4/62

(54) **GRAPHITE COMPOSITE NEGATIVE ELECTRODE MATERIAL, PREPARATION METHOD THEREFOR AND APPLICATION THEREOF**
NEGATIVELEKTRODENMATERIAL AUS GRAPHITVERBUND, HERSTELLUNGSVERFAHREN DAFÜR UND ANWENDUNG DAVON
MATÉRIAU D'ÉLECTRODE NÉGATIVE COMPOSITE EN GRAPHITE, SON PROCÉDÉ DE PRÉPARATION ET SON APPLICATION

(30) Priority: 28.12.2021 CN 202111629432
(43) Date of publication of application: 25.09.2024
(73) Proprietor: SVOLT ENERGY TECHNOLOGY CO., LTD, Changzhou, Jiangsu 213200 (CN)
(72) Inventor: ZHAO, Xiaofeng, hangzhou, Jiangsu 213200 (CN); LIU, Jing, hangzhou, Jiangsu 213200 (CN); YANG, Hongxin, hangzhou, Jiangsu 213200 (CN)
(74) Representative: Groth & Co. KB
(86) International application number: PCT/CN2022/106714
(87) International publication number: WO 2023/124025

(56) References cited:
- CN-A- 103 199 254
- CN-A- 106 025 219
- CN-A- 112 467 116
- CN-A- 113 764 644
- CN-A- 114 300 671
- CN-A- 114 408 915
- JP-A- 2021 077 445
- LEE MENG-LUN ET AL: "Li4Ti5O12-coated graphite anode materials for lithium-ion batteries", ELECTROCHIMICA ACTA, ELSEVIER, AMSTERDAM, NL, vol. 112, 7 September 2013 (2013-09-07), pages 529 - 534, XP028789650, ISSN: 0013-4686, DOI: 10.1016/J.ELECTACTA.2013.08.150
- AGHAMOHAMMADI HAMED ET AL: "A review study on titanium niobium oxide-based composite anodes for Li-ion batteries: Synthesis, structure, and performance", CERAMICS INTERNATIONAL, vol. 47, no. 19, 7 June 2021 (2021-06-07), NL, pages 26598 - 26619, XP093290672, ISSN: 0272-8842, DOI: 10.1016/j.ceramint.2021.06.127
- RENLIANG XU ET AL: "Comparison of sizing small particles using different technologies", POWDER TECHNOLOGY, ELSEVIER, BASEL (CH), vol. 132, no. 2-3, 24 June 2003 (2003-06-24), pages 145 - 153, XP002711749, ISSN: 0032-5910, DOI: 10.1016/S0032-5910(03)00048-2
- PENNELL K. D.: "Methods of Soil Analysis : Part 4 Physical Methods", 1 January 2002 (2002-01-01), pages 295 - 315, XP093290724, ISSN: 2163-2804, ISBN: 978-0-89118-841-4, Retrieved from the Internet <URL:http://onlinelibrary.wiley.com/wol1/doi/10.2136/sssabookser5.4.c13/fullpdf> DOI: 10.2136/sssabookser5.4.c13

## Description

### FIELD OF THE INVENTION

This disclosure relates to the technical field of graphite negative electrode materials, for example, a graphite composite negative electrode material and its preparation method and application.

### BACKGROUND OF THE INVENTION

Graphite materials are widely used in lithium-ion batteries due to their advantages such as wide range of material sources and high cycling performance. However, their layered structure of materials leads to high rate charging and discharging, and the intercalation and deintercalation path of lithium ions is longer, resulting in rate performance deviation. Although there are ways in the market to improve the power performance of materials by reducing their aggregate particle size and surface coating of the materials, the improvement effect is general and does not fundamentally improve the power performance of materials.

LEE MENG-LUN ET AL ("Li4Ti5O12-coated graphite anode materials for lithium-ion batteries", ELECTROCHIMICA ACTA, ELSEVIER, AMSTERDAM, NL, vol. 112, 7 September 2013 (2013-09-07), pages 529-534) synthesized and characterized Li₄Ti₅O₁₂ (LTO)-coated graphite as an anode material for Li-batteries. The surface of graphite powders was uniformly coated by the LTO nanoparticles to form a core-shelled structure via a sol-gel process, followed by calcination. The average size of graphite core was 20 um while the thickness of LTO shell was 60nm to 100nm. LTO-coated graphite has better rate-capability and cycle life at RT and 55°C, compared with the pristine graphite. The electrochemical impedance spectroscopy (EIS) results of the cell with LTO-coated graphite anode showed a significant suppression of the impedance rise after 60 cycles.

There are research institutions in China that use phenolic resin to conduct primary modification to the natural graphite. Although this modification method can improve the specific capacity and recycling rate of graphite materials, there are still serious defects as follows: (1) phenolic resin is prone to form a settling adhesive system during stirring or volatilization, resulting in its uneven coating on the surface of graphite; (2) the surface of graphite coated with primary phenolic resin will have holes, and some areas even are not coated, resulting in the graphite being exposed, which may contact with the electrolyte solution, causing generation of irreversible capacity, leading to a decrease in graphite cycling performance. Therefore, how to improve the electrochemical performance, especially the fast charging performance and first efficiency, of graphite negative electrode materials, is an urgent technical problem to be solved.

### SUMMARY OF INVENTION

This disclosure provides a graphite composite negative electrode material, a preparation method therefor, and an application thereof.

This disclosure provides a graphite composite negative electrode material in an embodiment, wherein the graphite composite negative electrode material includes a core and a coating layer which is coated on the surface of the core. The core includes graphite material, and the coating layer includes titanium niobate, carbon nanotubes, and amorphous carbon.

In an embodiment provided by the present disclosure, by coating the surface of graphite with a coating layer of mixed various substances and utilizing the relatively high theoretical specific capacity of titanium niobate, the lattice parameters and cell volume during the lithium ion deintercalation process have relatively small changes and high reversibility. Moreover, its charge and discharge potential is around 1.6V, which makes it not easy to generate SEI films and lithium dendrites during the cycling process. At the same time, it assists in the addition of carbon nanotubes and amorphous carbon, the carbon nanotubes form a network structure, and the amorphous carbon stabilizes the structure of materials, jointly improving the stability of the material's structure during the charge and discharge process, and enhancing the material's first efficiency, power, and cycling performance.

In an embodiment provided in this disclosure, if only pure titanium niobate is used for coating, there will be problems of low electronic conductivity and poor processing.

In an embodiment, based on 100% of the mass of the graphite composite negative electrode material, a ratio of the mass of the coating layer is 1-10%, such as 1%, 2%, 3%, 4%, 5%, 6%, 7%, 8%, 9%, or 10%, etc.

In an embodiment, based on 100% of the mass of the coating layer, a ratio of the mass of the titanium niobate is 10-50%, such as 10%, 15%, 20%, 25%, 30%, 35%, 40%, 45%, or 50%, etc.

In one embodiment, based on 100% of the mass of the coating layer, a ratio of the mass of the carbon nanotubes is 1-5%, such as 1%, 2%, 3%, 4%, or 5%, etc.

In one embodiment, the chemical formula of titanium niobate is Ti₁₋ₓNbₓO₇, 0<x<1, such as x is 0.1, 0.2, 0.3, 0.4, 0.5, 0.6, 0.7, 0.8, or 0.9, etc.

The present disclosure provides a preparation method for a graphite composite negative electrode material in an embodiment, wherein the negative electrode material is a graphite negative electrode material in the embodiment, and the preparation method comprises the following steps:
(1) mixing a titanium source, a niobium source, an asphalt and a solvent, spray drying and sintering to obtain a pre-coating material;
(2) mixing the pre-coating material in step (1) with a solution of a metal catalyst to obtain a mixture, and compositing a carbon source with the mixture through a vapor deposition to obtain a coating layer material; and
(3) mixing the coating layer material in step (2) with a graphite material, granulating, and carbonizing to obtain the graphite composite negative electrode material.

In an embodiment provided by the present disclosure, by coating a compound containing titanium niobate on the surface of graphite and utilizing the relatively high theoretical specific capacity of titanium niobate, the lattice parameters and cell volume during the lithium ion deintercalation process have relatively small changes and high reversibility. Moreover, its charge and discharge potential is around 1.6V, which makes it not easy to generate SEI films and lithium dendrites during the cycling process, improving the first efficiency, power, and cycling performance of the material.

At the same time, by infiltrating catalysts into the coating layer and using vapor deposition method to grow carbon nanotubes in titanium niobate and its amorphous carbon, the electronic conductivity of the material is improved, and the network structure formed by the carbon nanotubes is improved, which improves the structural stability of the material during the charging and discharging process and enhances cycling.

In an embodiment provided by the present disclosure, step (1) is a pre-carbonization process, and auxiliary step (3) of carbonization is required to fully achieve the conversion of carbon source and asphalt.

In an embodiment provided in this disclosure, the addition of asphalt can better improve processing performance. Without the addition of asphalt, it is difficult to achieve uniform coating of titanium niobate on the surface of the core, and the contact between titanium niobate and carbon nanotubes is poor.

In an embodiment provided in this disclosure, without the addition of catalysts, it is not possible to obtain a network structure of carbon nanotubes, which also makes it difficult to improve the power performance of the material and leads to a higher electronic impedance.

In one embodiment, the titanium source in step (1) includes titanium dioxide.

In an embodiment, the niobium source in step (1) includes any one or a combination of at least two of niobium pentoxide (Nb₂O₅), niobium trioxide (Nb₂O₃), niobium oxide, and niobium hydroxide.

In one embodiment, the solvent described in step (1) includes any one or a combination of at least two of carbon tetrachloride, n-hexane, xylene, N-methylpyrrolidone, and tetrahydrofuran.

In an embodiment, the mass ratio of titanium source, niobium source, and asphalt in step (1) is (1-5): (10-50): 100, such as 1:10:100, 1:30:100, 1:50:100, 3:10:100, 3:30:100, 3:50:100, 5:10:100, 5:30:100, or 5:50:100, etc.

In an embodiment, the sintering in step (1) is carried out at a temperature ranging from 600°C to 1000 °C, such as 600 °C, 700 °C, 800 °C, 900 °C, or 1000 °C, etc.

In one embodiment, the sintering in step (1) is carried out for a time period ranging from 1 hour to 6 hours, such as 1 hour, 2 hours, 3 hours, 4 hours, 5 hours, or 6 hours, etc.

In an embodiment, the median particle size of the metal catalyst in step (2) is 10-500nm, such as 10nm, 50nm, 100nm, 150nm, 200nm, 250nm, 300nm, 350nm, 400nm, 450nm, or 500nm.

In one embodiment, the metal catalyst in step (2) includes any one or a combination of at least two of nano-iron, nano-nickel, and nano-cobalt.

In one embodiment, in step (2), the mass ratio of the pre-coating material to the metal catalyst is 100: (0.5-2), such as 100:0.5, 100:1, 100:1.5, or 100:2, etc.

In one embodiment, the mixing in step (2) is carried out for a time period ranging from 1 hour to 24 hours, such as 1 hour, 2 hours, 5 hours, 8 hours, 10 hours, 13 hours, 15 hours, 18 hours, 20 hours, 22 hours, or 24 hours, etc.

In one embodiment, the mixed substances described in step (2) are sequentially filtered and vacuum dried to obtain a mixture.

In an embodiment, the temperature for vapor deposition in step (2) is in a range from 600 °C to 1000 °C, such as 600 °C, 700 °C, 800 °C, 900 °C, or 1000 °C, etc.

In an embodiment, the vapor deposition in step (2) is carried out for a time period ranging from 1 hour to 12 hours, such as 1 hour, 2 hours, 3 hours, 4 hours, 5 hours, 6 hours, 7 hours, 8 hours, 9 hours, 10 hours, 11 hours, or 12 hours, etc.

In an embodiment, the carbon source for vapor deposition in step (2) includes any one or a combination of at least two of methane, ethane, ethylene, acetylene, propane, and propylene.

In an embodiment, in step (3), the mass ratio of the coating layer material to the graphite material is (1-10): 100, such as 1:100, 2:100, 3:100, 4:100, 5:100, 6:100, 7:100, 8:100, 9:100, or 10:100, etc.

In an embodiment, the mixing in step (3) is carried out for a time period ranging from 30 minutes to 120 minutes, such as 30 minutes, 40 minutes, 50 minutes, 60 minutes, 70 minutes, 80 minutes, 90 minutes, 100 minutes, 110 minutes, or 120 minutes, etc.

In an embodiment, the granulating in step (3) is carried out at a temperature ranging from 600 °C to 800 °C, such as 600 °C, 650 °C, 700 °C, 750 °C, or 800 °C, etc.

In one embodiment, the granulating in step (3) is carried out for a time period ranging from 1hour to 6 hours, such as 1 hour, 2 hours, 3 hours, 4 hours, 5 hours, or 6 hours, etc.

In an embodiment, the carbonizing in step (3) is carried out at a temperature ranging from 1000 °C to 1300 °C, such as 1000 °C, 1050 °C, 1100 °C, 1150 °C, 1200 °C, 1250 °C, or 1300 °C, etc.

In an embodiment, the carbonizing in step (3) is carried out for a time period ranging from 6 hours to 24 hours, such as 6 hours, 8 hours, 10 hours, 12 hours, 15 hours, 18 hours, 20 hours, 22 hours, or 24 hours, etc.

In an embodiment, the preparation method comprises the following steps:
(1) mixing a titanium source, a niobium source and an asphalt in a mass ratio of (1-5): (10-50): 100 with a solvent, spray drying and sintering at 600°C to 1000 °C for 1 hour to 6 hours to obtain a pre-coating material;
(2) mixing the pre-coating material in step (1) with a solution of a metal catalyst with a median particle size of 10nm to 500nm in a mass ratio of the pre-coating material to the metal catalyst of 100: (0.5-2) for 1 hour to 24 hours to obtain a mixture, and compositing a carbon source with the mixture at 600°C to 1000 °C for 1 hour to 12 hours in a manner of a vapor deposition to obtain a coating layer material; and
(3) mixing the coating layer material in step (2) with a graphite material in a mass ratio of (1-10): 100 for 30 minutes to 120 minutes, granulating at 600 °C to 800 °C for 1 hour to 6 hours, and carbonizing at a temperature of 1000 °C to 1300 °C for 6 hours to 24 hours to obtain the graphite composite negative electrode material.

This disclosure relates to a lithium-ion battery in an embodiment, wherein the lithium-ion battery has the graphite composite negative electrode material as described in an embodiment.

### BRIEF DESCRIPTION OF THE DRAWINGS

The accompanying drawings are used to provide a further understanding of the technical solution of this application and constitute a part of the specification. They are used together with the examples of this application to explain the technical solution of this application and do not constitute a limitation on the technical solution of this application.

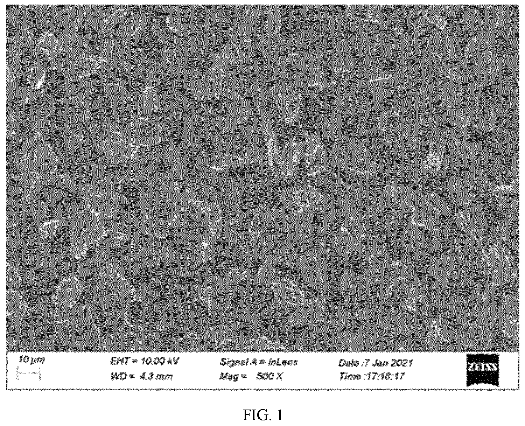

Fig. 1 shows the SEM image of the graphite composite negative electrode material provided in Example 1.

### DETAILED DESCRIPTION OF THE INVENTION

This disclosure provides a graphite composite negative electrode material in an embodiment, wherein the graphite composite negative electrode material includes a core and a coating layer which is coated on the surface of the core. The core includes graphite material, and the coating layer includes titanium niobate, carbon nanotubes, and amorphous carbon.

In an embodiment provided by the present disclosure, by coating the surface of graphite with a coating layer of mixed various substances and utilizing the relatively high theoretical specific capacity of titanium niobate, the lattice parameters and cell volume during the lithium ion deintercalation process have relatively small changes and high reversibility. Moreover, its charge and discharge potential is around 1.6V, which makes it difficult to generate SEI films and lithium dendrites during the cycling process. At the same time, it assists in the addition of carbon nanotubes and amorphous carbon, the carbon nanotubes form a network structure, and the amorphous carbon stabilizes the structure of materials, jointly improving the stability of the material's structure during the charge and discharge process, and enhancing the material's first efficiency, power, and cycling performance.

In an embodiment provided in this disclosure, if only pure titanium niobate is used for coating, there will be problems of low electronic conductivity and poor processing.

In an embodiment, based on 100% of the mass of the graphite composite negative electrode material, a ratio of the mass of the coating layer is 1-10%, such as 1%, 2%, 3%, 4%, 5%, 6%, 7%, 8%, 9%, or 10%, etc.

In an embodiment, based on 100% of the mass of the coating layer, a ratio of the mass of the titanium niobate is 10-50%, such as 10%, 15%, 20%, 25%, 30%, 35%, 40%, 45%, or 50%, etc.

In an embodiment provided by the present disclosure, if a ratio of the mass of titanium niobate is too large, the electronic impedance will be too high, and the voltage platform is too high, which is not conducive to fast charging and energy density improvement. However, if a ratio of the mass is too small, the effect of improving ion conductivity is not obvious, which will lead to no improvement in fast charging performance and deviation in its cycling performance.

In one embodiment, based on 100% of the mass of the coating layer, a ratio of the mass of the carbon nanotubes is 1-5%, such as 1%, 2%, 3%, 4%, or 5%, etc.

In an embodiment provided in this disclosure, if the mass fraction of carbon nanotubes is too large, it will affect the first efficiency and high-temperature performance of the material. However, if the mass fraction is too small, it cannot form a network structure, and the amplitude of electronic conductivity is not significant and the temperature rise is too high.

In one embodiment, the chemical formula of titanium niobate is Ti₁₋ₓNbₓO₇, 0<x<1, such as x is 0.1, 0.2, 0.3, 0.4, 0.5, 0.6, 0.7, 0.8, or 0.9, etc.

In an embodiment, the specific surface area of the graphite composite negative electrode material is 0.5-10m²/g, such as 0.5 m²/g, 1 m²/g, 2 m²/g, 3 m²/g, 4 m²/g, 5 m²/g, 6 m²/g, 7 m²/g, 8 m²/g, 9 m²/g, or 10 m²/g, etc.

In one embodiment, the specific surface area of the graphite composite negative electrode material is 1-5 m²/g, such as 1 m²/g, 2 m²/g, 3 m²/g, 4 m²/g, or 5 m²/g, etc.

In one embodiment, the median particle size of the graphite composite negative electrode material is 5-20 µm, for example, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm or 20 µm, etc.

In one embodiment, the median particle size of the graphite composite negative electrode material is 9-15 µm, for example, 9 µm, 10 µm, 11 µm, 12 µm, 13 µm, 14 µm or 15 µm, etc.

In one embodiment, the tap density of the graphite composite negative electrode material is 0.6-1.4g/cm³, such as 0.6 g/cm³, 0.7 g/cm³, 0.8 g/cm³, 0.9 g/cm³, 1 g/cm³, 1.1 g/cm³, 1.2 g/cm³, 1.3 g/cm³, or 1.4 g/cm³, etc.

In one embodiment, the tap density of the graphite composite negative electrode material is 0.9-1.2 g/cm³, such as 0.9 g/cm³, 1 g/cm³, 1.1 g/cm³, or 1.2 g/cm³, etc.

The present disclosure provides a method for preparing a graphite composite negative electrode material in an embodiment, wherein the negative electrode material is the graphite negative electrode material in an embodiment, and the method for preparing a graphite composite negative electrode material comprises the following steps:
(1) mixing a titanium source, a niobium source, an asphalt and a solvent, spray drying and sintering to obtain a pre-coating material;
(2) mixing the pre-coating material in step (1) with a solution of a metal catalyst to obtain a mixture, and compositing a carbon source with the mixture in a manner of vapor deposition to obtain a coating layer material; and
(3) mixing the coating layer material in step (2) with a graphite material, granulating, and carbonizing to obtain the graphite composite negative electrode material.

In an embodiment provided by the present disclosure, by coating a compound containing titanium niobate on the surface of graphite and utilizing the relatively high theoretical specific capacity of titanium niobate, the lattice parameters and cell volume during the lithium ion deintercalation process have relatively small changes and high reversibility. Moreover, its charge and discharge potential is around 1.6V, which makes it not easy to generate SEI films and lithium dendrites during the cycling process, improving the first efficiency, power, and cycling performance of the material.

At the same time, by infiltrating catalysts into the coating layer and using vapor deposition method to grow carbon nanotubes in titanium niobate and its amorphous carbon, the electronic conductivity of the material is improved, and the network structure formed by the carbon nanotubes is improved, which improves the structural stability of the material during the charging and discharging process and enhances cycling.

In an embodiment provided by the present disclosure, step (1) is a pre-carbonization process, and auxiliary step (3) of carbonization is required to fully achieve the conversion of carbon source and asphalt.

In an embodiment provided in this disclosure, the addition of asphalt can better improve processing performance. Without the addition of asphalt, it is difficult to achieve uniform coating of titanium niobate on the surface of the core, at the same time the contact between titanium niobate and carbon nanotubes is poor.

In an embodiment provided in this disclosure, without the addition of catalysts, it is not possible to obtain a network structure of carbon nanotubes, which also makes it difficult to improve the power performance of the material and leads to a higher electronic impedance.

In one embodiment, the titanium source in step (1) includes titanium dioxide.

In an embodiment, the niobium source in step (1) includes any one or a combination of at least two of niobium pentoxide (Nb₂O₅), niobium trioxide (Nb₂O₃), niobium oxide, and niobium hydroxide.

In one embodiment, the solvent described in step (1) includes any one or a combination of at least two of carbon tetrachloride, n-hexane, xylene, N-methylpyrrolidone, and tetrahydrofuran.

In an embodiment, the mass ratio of titanium source, niobium source, and asphalt in step (1) is (1-5): (10-50): 100, such as 1:10:100, 1:30:100, 1:50:100, 3:10:100, 3:30:100, 3:50:100, 5:10:100, 5:30:100, or 5:50:100, etc.

In an embodiment, the sintering in step (1) is carried out at a temperature ranging from 600 °C to 1000 °C, such as 600 °C, 700 °C, 800 °C, 900 °C, or 1000 °C, etc.

In an embodiment provided by the present disclosure, if the temperature of sintering in step (1) is too low, it will affect the coating effect of amorphous carbon, that is, the coating is uneven, and if the temperature of sintering is too high, it will cause the amorphous carbon to become more ordered and the impedance will increase.

In one embodiment, the sintering in step (1) is carried out for a time period ranging from 1 hour to 6 hours, such as 1 hour, 2 hours, 3 hours, 4 hours, 5 hours, or 6 hours, etc.

In an embodiment, the median particle size of the metal catalyst in step (2) is 10-500nm, such as 10nm, 50nm, 100nm, 150nm, 200nm, 250nm, 300nm, 350nm, 400nm, 450nm, or 500nm.

In an embodiment provided by the present disclosure, if the median particle size of the metal catalyst is too large, it is not conducive to the generation of carbon nanotubes and affects the amount of carbon nanotubes generated, resulting in a deviation in catalytic performance and prolonging the generation time of carbon nanotubes.

In one embodiment, the metal catalyst in step (2) includes any one or a combination of at least two of nano-iron, nano-nickel, and nano-cobalt.

In one embodiment, in step (2), the mass ratio of the pre-coating material to the metal catalyst is 100: (0.5-2), such as 100:0.5, 100:1, 100:1.5, or 100:2, etc.

In an embodiment provided by the present disclosure, if the mass ratio of the pre-coating material to the metal catalyst is too large, that is, if the amount of the metal catalyst is too small, the amount of carbon nanotubes generated is too small. If the metal catalyst is added too much, it will lead to a high content of magnetic impurities in the material, affecting the self-discharge of the material.

In one embodiment, the mixing in step (2) is carried out for a time period ranging from 1 hour to 24 hours, such as 1 hour, 2 hours, 5 hours, 8 hours, 10 hours, 13 hours, 15 hours, 18 hours, 20 hours, 22 hours, or 24 hours, etc.

In one embodiment, the mixed substances described in step (2) are sequentially filtered and vacuum dried to obtain a mixture.

In an embodiment, the temperature for vapor deposition in step (2) is in a range from 600 °C to 1000 °C, such as 600 °C, 700 °C, 800 °C, 900 °C, or 1000 °C, etc.

In an embodiment provided by the present disclosure, if the temperature for vapor deposition in step (2) is too low, it will affect the quality of carbon nanotube generated (i.e., the pipe diameter is too large and the pipe length is relatively small), and if the temperature for vapor deposition is too high, it will cause the carbon nanotube to self-aggregate.

In an embodiment, the vapor deposition in step (2) is carried out for a time period ranging from 1 hour to 12 hours, such as 1 hour, 2 hours, 3 hours, 4 hours, 5 hours, 6 hours, 7 hours, 8 hours, 9 hours, 10 hours, 11 hours, or 12 hours, etc.

In an embodiment, the carbon source for vapor deposition in step (2) includes any one or a combination of at least two of methane, ethane, ethylene, acetylene, propane, and propylene.

In an embodiment, in step (3), the mass ratio of the coating layer material to the graphite material is (1-10): 100, such as 1:100, 2:100, 3:100, 4:100, 5:100, 6:100, 7:100, 8:100, 9:100, or 10:100, etc.

In an embodiment, the mixing in step (3) is carried out for a time period ranging from 30 minutes to 120 minutes, such as 30 minutes, 40 minutes, 50 minutes, 60 minutes, 70 minutes, 80 minutes, 90 minutes, 100 minutes, 110 minutes, or 120 minutes, etc.

In an embodiment, the granulating in step (3) is carried out at a temperature ranging from 600 °C to 800 °C, such as 600 °C, 650 °C, 700 °C, 750 °C, or 800 °C, etc.

In one embodiment, the granulating in step (3) is carried out for a time period ranging from 1 hour to 6 hours, such as 1 hour, 2 hours, 3 hours, 4 hours, 5 hours, or 6 hours, etc.

In an embodiment, the carbonizing in step (3) is carried out at a temperature ranging from 1000 °C to 1300 °C, such as 1000 °C, 1050 °C, 1100 °C, 1150 °C, 1200 °C, 1250 °C, or 1300 °C, etc.

In an embodiment, the carbonizingin step (3) is carried out for a time period ranging from 6 hours to 24 hours, such as 6 hours, 8 hours, 10 hours, 12 hours, 15 hours, 18 hours, 20 hours, 22 hours, or 24 hours, etc.

In an embodiment, the preparation method comprises the following steps:
(1) mixing a titanium source, a niobium source and an asphalt in a mass ratio of (1-5): (10-50): 100 with a solvent, spray drying and sintering at 600°C to 1000 °C for 1 hour to 6 hours to obtain a pre-coating material;
(2) mixing the pre-coating material in step (1) with a solution of a metal catalyst with a median particle size of 10nm to 500nm in a mass ratio of the pre-coating material to the metal catalyst of 100: (0.5-2) for 1 hour to 24 hours to obtain a mixture, and compositing a carbon source with the mixture at 600°C to 1000 °C for 1 hour to 12 hours in a manner of a vapor deposition to obtain a coating layer material; and
(3) mixing the coating layer material in step (2) with a graphite material in a mass ratio of (1-10): 100 for 30 minutes to 120 minutes, granulating at 600 °C to 800 °C for 1 hour to 6 hours, and carbonizing at a temperature of 1000 °C to 1300 °C for 6 hours to 24 hours to obtain the graphite composite negative electrode material.

This disclosure relates to a lithium-ion battery in an embodiment, which has the graphite composite negative electrode material as described in an embodiment.

### Example 1

This example provides a graphite composite negative electrode material, which includes a core and a coating layer which is coated on the surface of the core. The core is an artificial graphite material, and the coating layer is composed of titanium niobate (chemical formula Ti_{0.05}Nb_{0.95}O₇), carbon nanotubes, and amorphous carbon.

Based on 100% of the mass of the graphite composite negative electrode material, a ratio of the mass of the coating layer is 5%; and
based on 100% the mass of the coating layer, a ratio of the mass of titanium niobate is 20%, and a ratio of the mass of carbon nanotubes is 3%.

The method for preparing the graphite composite negative electrode material is as follows:
(1) 3g of titanium dioxide, 30g of niobium pentoxide (Nb₂O₅) and 100g of asphalt were weighed and added into 2600ml of carbon tetrachloride organic solvent to make the content to be 5wt%, and the materials were ball milled, spray dried, and sintered at 800 °C for 3h, and crushed to obtain a pre-coating material;
(2) 100g of the pre-coating material was soaked in 100ml of carbon tetrachloride catalyst solution with 1wt% nano-iron (median particle size 50nm) for 12 hours, and the materials were filtered and vacuum dried at 80 °C for 24 hours. Afterwards, the obtained material was transferred to a tube furnace and the air inside the tube was discharged in a nitrogen atmosphere. Thereafter, methane gas was introduced, and the material was heated to 800 °C and kept at this temperature for 6 hours, and then cooled to room temperature in a nitrogen atmosphere to obtain a coating layer material; and
(3) 5g of the coating layer material in step (2) and 100g artificial graphite were put into a fusion machine, the materials were mixed at a speed of 40Hz/min for 60min, and then the mixture was added into a high-speed mixer for high-speed granulation, modification, and mixing. The granulation temperature was 700 °C, and the granulation time was 3h. Afterwards, under the protection of argon inert gas, carbonization treatment was carried out in a calciner at 1200 °C for 12 hours to obtain the granulated graphite composite material.

Fig. 1 shows the SEM image of the graphite composite negative electrode material provided in Example 1. The graphite composite negative electrode material prepared in Example 1 was subjected to SEM testing, and it can be seen from Fig. 1 that the resulting composite materials are present in granular shape with a particle size between 10µm and 20µm, and the size distribution is uniform.

### Example 2

This example provides a graphite composite negative electrode material, which includes a core and a coating layer which is coated on the surface of the core. The core is an artificial graphite material, and the coating layer is composed of titanium niobate (chemical formula Ti_{0.01}Nb_{0.99}O₇), carbon nanotubes, and amorphous carbon.

Based on 100% of the mass of the graphite composite negative electrode material, a ratio of the mass of the coating layer is 5%; and
based on 100% of the mass of the coating layer, a ratio of the mass of titanium niobate is 10%, and a ratio of the mass of carbon nanotubes is 1%.

The method for preparing the graphite composite negative electrode material is as follows:
(1) 1g of titanium dioxide, 10g of niobium trioxide (Nb₂O₃) and 100g of asphalt were weighed and added into 1111ml of N-methylpyrrolidone organic solvent to make the content to be 1wt%, and the materials were ball milled, spray dried, and sintered at 600 °C for 6h, and crushed to obtain a pre-coating material;
(2) 100g of the pre-coating material was soaked in 50ml of N-methylpyrrolidone solution with 0.1wt% nano-nickel (with a median particle size of 500nm) for 1 hour, and the materials were filtered and vacuum dried at 80 °C for 24 hours. Then the obtained material was transfer to a tube furnace and the air inside the tube is discharged in a nitrogen atmosphere. Then, acetylene gas was introduced, and the material was heated to 600 °C and kept at the temperature for 12 hours, and then cooled down to room temperature under nitrogen atmosphere to obtain a coating layer material; and
(3) 1g of the coating layer material in step (1) and 100g of artificial graphite were put into a fusion machine, the materials were mixed at a speed of 40Hz/min for 30min, and then the mixture was added into a high-speed mixer for high-speed granulation, modification, and mixing. The granulation temperature was 600 °C, and the granulation time was 6 hours. Afterwards, under the protection of argon inert gas, the material was heated in a calciner for carbonization treatment, and kept at a constant temperature of 1000 °C for 24 hours to obtain the granulated graphite composite material.

### Example 3

This example provides a graphite composite negative electrode material, which includes a core and a coating layer which is coated on the surface of the core. The core is an artificial graphite material, and the coating layer is composed of titanium niobate (chemical formula Ti_{0.95}Nb_{0.05}O₇), carbon nanotubes, and amorphous carbon.

Based on 100% of the mass of the graphite composite negative electrode material, a ratio of the mass of the coating layer is 5%; and

based on 100% of the mass of the coating layer, a ratio of the mass of titanium niobate is 50%, and a ratio of the mass of carbon nanotubes is 5%.

The method for preparing the graphite composite negative electrode material is as follows:
(1) 5g of titanium dioxide, 50g of niobium hydroxide and 100g of asphalt were weighed and added into 1555ml of n-hexane organic solvent to make the content to be 10wt%, and the materials were ball milled, spray dried, sintered at 1000 °C for 1h, and crushed to obtain a pre-coating material;
(2) 100g of the pre-coating material was soaked in 100ml of n-hexane catalyst solution with 2wt% nano-cobalt (with a median particle size of 100nm) for 24 hours, and the materials were filtered and vacuum dried at 80 °C for 24 hours. Then the obtained material was transferred to a tube furnace and the air inside the tube was discharged in a nitrogen atmosphere. Then, ethylene gas was introduced and the material was heated to 1000 °C and kept at this temperature for 1 hour, and then cooled to room temperature in a nitrogen atmosphere to obtain a coating layer material; and
(3) 10g of the coating layer material in step (1) and 100g of graphite were put into a fusion machine, the materials were mixed at a speed of 40Hz/min for 120min, and then the mixture was added into a high-speed mixer for high-speed granulation, modification, and mixing. The granulation temperature was 800 °C, and the granulation time was 1 hour. Afterwards, under the protection of argon inert gas, the material was heated in a calciner for carbonization treatment, and kept at a constant temperature of 1300 °C for 6 hours to obtain the granulated graphite composite material.

### Example 4

The difference between this example and Example 1 is that in this example, based on 100% of the mass of the coating layer, a ratio of the mass of titanium niobate is 5%, and the mass of titanium dioxide and niobium pentoxide (Nb₂O₅) in the preparation method is adjusted adaptively.

The other steps and parameters in the preparation method are consistent with that of Example 1.

### Example 5

The difference between this example and Example 1 is that in this example, based on 100% of the mass of the coating layer, a ratio of the mass of titanium niobate is 55%, and the mass adjustment of titanium dioxide and niobium pentoxide (Nb₂O₅) in the preparation method is adjusted adaptively.

The other steps and parameters in the preparation method are consistent with that of Example 1.

### Example 6

The difference between this example and Example 1 is that in this example, based on 100% of the mass of the coating layer, a ratio of the mass of carbon nanotubes is 15%, and the mass of titanium dioxide and niobium pentoxide (Nb₂O₅) in the preparation method is adjusted adaptively.

The other steps and parameters in the preparation method are consistent with that of Example 1.

### Comparative Example 1

This Comparative Example provides a graphite composite negative electrode material, which includes an artificial graphite core and an amorphous carbon coating layer located on the surface of the core.

The method for preparing the graphite composite negative electrode material is as follows:
10g of asphalt was added into 100ml of n-hexane organic solvent to make the content to be 10wt%, and the materials were ball milled, and then 100g of artificial graphite was added. The materials were mixed at a speed of 40Hz/min for 30 minutes, and then the mixture was added into a high-speed mixer for high-speed granulation, modification, and mixing, in which the granulation temperature was 600 °C, and the granulation time was 6 hours. Afterwards, under the protection of argon inert gas, the material was heated in a calciner for carbonization treatment, and kept at a constant temperature of 1000 °C for 24 hours to obtain the granulated graphite composite material.

### Comparative Example 2

The difference between this Comparative Example and Example 1 is that there are only amorphous carbon and titanium niobate in the coating layer of this Comparative Example.

In the preparation method, in step (2), nano-iron was not added.

The other steps and parameters in the preparation method are consistent with that of Example 1.

### Comparative Example 3

The difference between this Comparative Example and Example 1 is that only titanium niobate is used for coating in this Comparative Example.

The preparation method comprises:
(1) 3g titanium dioxide, 30g niobium pentoxide (Nb₂O₅) and 100g asphalt were weighed and added into 2600ml carbon tetrachloride organic solvent to make the content to be 5wt%, and the materials were ball milled, spray dried, and sintered at 800 °C for 3h, and crushed to obtain a pre-coating material; and
(2) 5g of the pre-coating material in step (1) and 100g of artificial graphite were put into a fusion machine, the materials were mixed at a speed of 40Hz/min for 60min, and then the mixture was added into a high-speed mixer for high-speed granulation, modification, and mixing, in which the granulation temperature is 700 °C, and the granulation time is 3h. Afterwards, under the protection of argon inert gas, the material was kept at a constant temperature of 1200 °C for 12 hours for carbonization treatment, to obtain the granulated graphite composite material. According to the national standard GB/T-24533-2009, "Graphite negative electrode materials for lithium-ion batteries", the powder conductivity of the negative electrode materials provided in Examples 1-6 and Comparative Examples 1-3 was tested. The test results are shown in Table 1 (Table 1 also shows the specific surface area, tap density, and median particle size of the graphite composite negative electrode materials, these values do not form part of the claimed subject-matter and are retained only as experimental data).

**Table 1**

| | Powder conductivity (S/cm) | Specific surface area (m²/g) | Tap density (g/cm³) | Median particle size (µm) |
|---|---|---|---|---|
| Example1 | 51 | 1.72 | 1.15 | 12.4 |
| Example2 | 43 | 1.69 | 1.13 | 12.9 |
| Example 3 | 45 | 1.62 | 1.12 | 13.1 |
| Example 4 | 46 | 1.69 | 1.12 | 12.8 |
| Example 5 | 38 | 1.68 | 1.17 | 12.9 |
| Example 6 | 49 | 1.74 | 1.09 | 11.8 |
| Comparative Example1 | 15 | 1.24 | 0.98 | 15.3 |
| Comparative Example2 | 9 | 1.07 | 1.01 | 15.5 |
| Comparative Example3 | 12 | 1.09 | 1.04 | 14.3 |

From the data results of Examples 1-6, it can be seen that the graphite composite negative electrode materials provided in this disclosure have a powder conductivity of over 38S/cm.

From the data results of Example 1 and Examples 4-5, it can be seen that a ratio of the mass of titanium niobate is too small, which is not conducive to the improvement of powder conductivity. If a ratio of the mass of titanium niobate is too large, it will lead to an increase in ion impedance and a decrease in charging rate.

From the data results of Example 1 and Example 6, it can be seen that an excessive ratio of mass of carbon nanotubes can lead to an increase in specific surface area, a decrease in storage performance, a decrease in tap density, and an impact on energy density.

From the data results of Example 1 and Comparative Example 1, it can be seen that compared with simply carbon coating, the coating layer provided in this disclosure can better achieve the cycling performance of the material.

From the data results of Example 1 and Comparative Example 2, it can be seen that without the addition of catalyst, i.e. without carbon nanotubes in the coating layer, it is difficult to achieve an increase in material's electrical conductivity.

From the data results of Example 1 and Comparative Example 3, it can be seen that simply coating titanium niobate has the problem of poor coating quality and deteriorating cycling performance.

The graphite composite negative electrode materials prepared in Examples 1-6 and Comparative Examples 1-3 were assembled respectively into button batteries according to the following methods:
An adhesive, a conductive agent and a solvent were added into the negative electrode material, stirred and mixed evenly to prepare a negative electrode slurry. The negative electrode slurry was coated on a copper foil, dried, rolled, and cut to obtain a negative electrode plate. The adhesive is LA132 adhesive, the conductive agent is SP conductive agent, and the solvent is secondary distilled water. The weight ratio of the negative electrode material, SP conductive agent, LA132 adhesive, and secondary distilled water is 95:1:4:220. The metal lithium sheet was used as the counter electrode, a composite film of polyethylene (PE) film, polypropylene (PP) film, or polyethylene propylene (PEP) was used as a separator, and LiPF₆/EC+DEC (the concentration of LiPF₆ was 1.3mol/L, and the volume ratio of EC and DEC was 1:1) was used as the electrolyte solution, and the battery was assembled in an argon filled glove box.

The prepared button batteries were installed respectively on the Wuhan LAND CT2001A type battery tester, and charged and discharged at a rate of 0.1C. The charging and discharging voltage range was from 0.005V to 2.0V, and the first discharge capacity and first discharge efficiency were measured. Their discharge capacities at 3C rate were tested. The results are shown in Table 2.

**Table 2.**

| | First discharge specific capacity (mAh/g) | First efficiency (%) | Discharge capacity ratio of 3C/0.2C (%) |
|---|---|---|---|
| Example 1 | 360.3 | 97.1 | 98.3 |
| Example 2 | 359.4 | 97.3 | 98.1 |
| Example 3 | 358.5 | 96.9 | 97.8 |
| Example 4 | 358.1 | 95.9 | 98.4 |
| Example 5 | 360.1 | 96.7 | 97.4 |
| Example 6 | 357.8 | 95.6 | 98.4 |
| Comparative Example1 | 352.2 | 93.1 | 89.1 |
| Comparative Example2 | 351.3 | 94.5 | 88.9 |
| Comparative Example3 | 352.3 | 93.2 | 87.6 |

From Table 2, it can be seen that the discharge capacity of the composite negative electrode materials provided in this disclosure is significantly higher than that of the Comparative Examples 1-3, with a first efficiency of over 95.6% at 0.1C and a discharge capacity ratio of over 97.4% at 3C/0.2C. This indicates that the niobium titanium compound coated on the surface of the graphite material not only improves the first efficiency of the materials, but also has high electronic conductivity and rate performance.

Respectively, the negative electrode material prepared in Examples 1-6 and Comparative Examples 1-3 were used to prepare the negative electrodes, a ternary material (LiNi_{1/3}Co_{1/3}Mn_{1/3}O₂) was used as the positive electrode material to prepare the positive electrodes, LiPF₆ (the solvent was EC+DEC with a volume ratio of 1:1, and the concentration was 1.3mol/L) was used as the electrolyte solution, and celegard2400 was used as the separators to prepare 2Ah pouch batteries.

During the preparation of the negative electrodes, an adhesive, a conductive agent, and a solvent were added to the negative electrode material, stirred and mixed evenly to form the negative electrode slurry. The negative electrode slurry was coated on a copper foil, dried, rolled, and cut to obtain the negative electrode plate. The adhesive was LA132 adhesive, the conductive agent was SP conductive agent, and the solvent was secondary distilled water. The weight ratio of negative electrode material, SP conductive agent, LA132 adhesive and secondary distilled water was 95:1:4:220.

During the preparation of the positive electrode, an adhesive, a conductive agent, and a solvent were added to the positive electrode material, stirred and mixed evenly to form the positive electrode slurry. The positive electrode slurry was coated on an aluminum foil, dried, rolled, and cut to obtain the positive electrode plate. The adhesive was PVDF, the conductive agent was SP, and the solvent was N-methylpyrrolidone. The weight ratio of the positive electrode material, the conductive agent, the adhesive and the solvent was 93:3:4:140.

The pouch batteries provided for Examples 1-6 and Comparative Examples 1-3 were tested under the following conditions:

### 1) Rate performance test

The charging and discharging voltage range was 2.8-4.2V, and the testing temperature was 25 ± 3.0 °C. The batteries were charged at 1.0C, 2.0C, 3.0C, 5.0C, respectively, and discharged at 1.0C. The constant current ratio and temperature of the batteries under different charging modes were tested. The results are shown in Table 3:

**Table 3**

| | Rate | 1C | 2C | 3C | 5C |
|---|---|---|---|---|---|
| Example 1 | Constant current ratio (%) | 97.91 | 93.79 | 89.93 | 80.24 |
| | Temperature (°C) | 26.4 | 27.2 | 31.1 | 34.8 |
| Example 2 | Constant current ratio (%) | 97.11 | 92.79 | 87.93 | 78.24 |
| | Temperature (°C) | 26.5 | 28.4 | 31.2 | 33.8 |
| Example 3 | Constant current ratio (%) | 96.91 | 92.99 | 88.91 | 76.24 |
| | Temperature (°C) | 26.1 | 28.2 | 31.1 | 33.8 |
| Example 4 | Constant current ratio (%) | 96.97 | 93.01 | 88.92 | 77.01 |
| | Temperature (°C) | 26.0 | 28.0 | 30.9 | 33.1 |
| Example 5 | Constant current ratio (%) | 95.91 | 91.19 | 86.99 | 73.14 |
| | Temperature (°C) | 26.9 | 29.2 | 32.1 | 34.8 |
| Example 6 | Constant current ratio (%) | 97.92 | 93.82 | 89.99 | 80.64 |
| | Temperature (°C) | 26.2 | 26.8 | 30.3 | 34.1 |
| Comparative Example1 | Constant current ratio (%) | 94.65 | 89.34 | 85.65 | 64.6 |
| | Temperature (°C) | 28.3 | 31.4 | 37.5 | 39.9 |
| Comparative Example2 | Constant current ratio (%) | 93.15 | 88.24 | 84.44 | 63.61 |
| | Temperature (°C) | 29.5 | 32.6 | 38.5 | 40.9 |
| Comparative Example3 | Constant current ratio (%) | 92.65 | 87.94 | 83.75 | 62.63 |
| | Temperature (°C) | 29.6 | 33.6 | 38.4 | 41.2 |

From Table 3, it can be seen that the rate charging performance of the pouch batteries provided by the present disclosure is significantly better than that of the comparative examples, and the charging time is shorter, indicating that the composite negative electrode materials of the present disclosure have good fast charging performance. Because the migration of lithium ions is required during the charging process of the battery, the composite material provided by Examples 1-3 of the present disclosure has titanium niobate with high electronic conductivity on the surface, which provides convenience for the intercalation and deintercalation of lithium ions, improves its rate performance, and reduces its temperature rise.

### 2) Cyclic performance testing

The following experiments were conducted on the pouch batteries made with the materials of Examples 1-6 and Comparative Examples 1-3: 100, 300, and 500 charge and discharge cycles were conducted at a 2C/2C charge and discharge rate, with a voltage range of 2.8-4.2V, to test the capacity retention rate thereof. The results are shown in Table 4:

**Table 4**

| | Initial capacity retention rate (%) | Capacity retention rate after 100 cycles (%) | Capacity retention rate after 300 cycles (%) | Capacity retention rate after 500 cycles (%) |
|---|---|---|---|---|
| Example 1 | 100 | 99.47 | 97.02 | 96.14 |
| Example 2 | 100 | 99.36 | 96.95 | 96.12 |
| Example 3 | 100 | 99.28 | 96.81 | 95.05 |
| Example 4 | 100 | 99.18 | 96.89 | 95.98 |
| Example 5 | 100 | 99.08 | 96.45 | 94.99 |
| Example 6 | 100 | 99.18 | 95.82 | 94.95 |
| Comparative Example1 | 100 | 98.19 | 94.27 | 93.41 |
| Comparative Example2 | 100 | 97.11 | 93.23 | 93.11 |
| Comparative Example3 | 100 | 97.23 | 93.54 | 92.98 |

From Table 4, it can be seen that, as for the cycling performance of the lithium-ion batteries prepared by the composite negative electrode materials (Examples 1-3) prepared in this disclosure, when charging and discharging test at 2C/2C was tested, the capacity retention rate after 100 cycles can reach over 99.08%, the capacity retention rate after 200 cycles can reach over 95.82%, and the capacity retention rate after 500 cycles can reach over 94.95%, which are significantly better than that of the Comparative Examples 1-3 in all stages. The graphite surface coated with titanium niobate and carbon nanotubes can improve the transmission rate of lithium ions, thereby improving the cycling performance of the battery.

Based on the data from Tables 2, 3, and 4, it can be known that:
The first efficiency, rate, and cycling performance of both button battery and full battery provided in this disclosure have been significantly improved.

From the data results of Example 1 and Examples 4-5, it can be seen that, if a ratio of the mass of titanium niobate is too small, it is not conducive to structural stability, and the cycling performance is unfavorable; and if a ratio of the mass of titanium niobate is too large, the adhesion between materials will be poor, which can lead to poor cycling.

From the data results of Example 1 and Example 6, it can be seen that, if a ratio of the mass of carbon nanotubes is excessive, it can lead to poor storage performance, thereby reducing cycling performance.

From the data results of Example 1 and Comparative Example 1, it can be seen that compared with simple carbon coating, the coating layer provided in this disclosure can better achieve the bonding force between materials and improve cycling performance.

From the data results of Example 1 and Comparative Example 2, it can be seen that without the addition of catalyst, i.e. without carbon nanotubes in the coating layer, it is difficult to achieve impedance reduction, which affects the long-term cycling performance of the materials.

From the data results of Example 1 and Comparative Example 3, it can be seen that simply coating titanium niobate has a problem of poor adhesion between the core and shell.

In summary, in this disclosure, by coating the surface of graphite with a coating layer of mixed various substances and utilizing the relatively high theoretical specific capacity of titanium niobate, the lattice parameters and cell volume during the lithium ion deintercalation process have relatively small changes and high reversibility. And its charge and discharge potential is around 1.6V, which makes it difficult to generate SEI films and lithium dendrites during the cycling process. At the same time, it assists in the addition of carbon nanotubes and amorphous carbon, the carbon nanotubes form a network structure, and the amorphous carbon stabilizes the structure of materials, jointly improving the stability of the material's structure during the charge and discharge process, and enhancing the material's first efficiency, power, and cycling performance.

## Claims

1. A graphite composite negative electrode material, the graphite composite negative electrode material comprises a core and a coating layer which is coated on the surface of the core, the core comprises graphite material, and the coating layer comprises titanium niobate, carbon nanotubes, and amorphous carbon.

2. The graphite composite negative electrode material of claim 1, wherein based on 100% of the mass of the graphite composite negative electrode material, a ratio of the mass of the coating layer is in a range from 1% to 10%, a ratio of the mass of the titanium niobate is in a range from 10% to 50%, and a ratio of the mass of the carbon nanotube is in a range from 1% to 5%.

3. The graphite composite negative electrode material of claim 1 or 2, wherein the chemical formula of the titanium niobate is Ti₁₋ₓNbₓO₇, 0<x<1.

4. A method for preparing the graphite composite negative electrode material of any one of claims 1 to 3, comprising the following steps:
(1) mixing a titanium source, a niobium source, an asphalt and a solvent, spray drying and sintering to obtain a pre-coating material;
(2) mixing the pre-coating material in step (1) with a solution of a metal catalyst to obtain a mixture, and compositing a carbon source with the mixture in a manner of vapor deposition to obtain a coating layer material; and
(3) mixing the coating layer material in step (2) with a graphite material, granulating, and carbonizing to obtain the graphite composite negative electrode material.

5. The method for preparing the graphite composite negative electrode material of claim 4, wherein the titanium source in step (1) comprises titanium dioxide; the niobium source in step (1) comprises any one or a combination of at least two of niobium pentoxide, niobium trioxide, niobium oxide, and niobium hydroxide; the solvent in step (1) comprises any one or a combination of at least two of carbon tetrachloride, n-hexane, xylene, N-methylpyrrolidone and tetrahydrofuran; and a mass ratio of the titanium source, the niobium source, and the asphalt in step (1) is (1-5): (10-50): 100.

6. The method for preparing the graphite composite negative electrode material of claim 4 or 5, wherein the sintering in step (1) is carried out at a temperature ranging from 600 °C to 1000 °C for a time period ranging from 1 hour to 6 hours.

7. The method for preparing the graphite composite negative electrode material of any one of claims 4 to 6, wherein the median particle size of the metal catalyst in step (2) is in a range from 10nm to 500nm; the metal catalyst in step (2) comprises any one or a combination of at least two of nano-iron, nano-nickel, and nano-cobalt; in step (2), the mass ratio of the pre-coating material to the metal catalyst is 100: (0.5-2); the mixing in step (2) is carried out for a time period ranging from 1 hour to 24 hours; and subsequently filtering and vacuum drying the mixed substances in step (2) to obtain a mixture.

8. The method for preparing the graphite composite negative electrode material of any one of claims 4 to 7, wherein the vapor deposition in step (2) is carried out at a temperature ranging from 600 °C to 1000 °C for a time period ranging from 1 hour to 12 hours, and the carbon source for vapor deposition in step (2) includes any one or a combination of at least two of methane, ethane, ethylene, acetylene, propane, and propylene.

9. The method for preparing the graphite composite negative electrode material of any one of claims 4 to 8, wherein in step (3), a mass ratio of the coating layer material to the graphite material is (1-10): 100.

10. The method for preparing the graphite composite negative electrode material of any one of claims 4 to 9, wherein the mixing in step (3) is carried out for a time period ranging from 30 minutes to 120 minutes.

11. The method for preparing the graphite composite negative electrode material of any one of claims 4 to 10, wherein the granulating in step (3) is carried out at a temperature ranging from 600 °C to 800 °C for a time period ranging from 1 hour to 6 hours; and the carbonizing in step (3) is carried out at a temperature ranging from 1000 °C to 1300 °C for a time period ranging from 6 hours to 24 hours.

12. The method for preparing the graphite composite negative electrode material of any one of claims 4 to 11, wherein the method for preparing the graphite composite negative electrode material comprises the following steps:
(1) mixing a titanium source, a niobium source and an asphalt in a mass ratio of (1-5): (10-50): 100 with a solvent, spray drying and sintering at 600°C to 1000 °C for 1 hour to 6 hours to obtain a pre-coating material;
(2) mixing the pre-coating material in step (1) with a solution of a metal catalyst with a median particle size of 10nm to 500nm in a mass ratio of the pre-coating material to the metal catalyst of 100: (0.5-2) for 1 hour to 24 hours to obtain a mixture, and compositing a carbon source with the mixture at 600°C to 1000 °C for 1 hour to 12 hours in a manner of a vapor deposition to obtain a coating layer material; and
(3) mixing the coating layer material in step (2) with a graphite material in a mass ratio of (1-10): 100 for 30 minutes to 120 minutes, granulating at 600 °C to 800 °C for 1 hour to 6 hours, and carbonizing at a carbonizing temperature of 1000 °C to 1300 °C for 6 hours to 24 hours to obtain the graphite composite negative electrode material.

13. A lithium-ion battery, comprising the graphite composite negative electrode material of any one of claims 1 to 3.

## Patentansprüche

1. Negativelektrodenmaterial aus Graphitverbund, wobei das Negativelektrodenmaterial aus Graphitverbund einen Kern und eine Beschichtungsschicht umfasst, die auf der Oberfläche des Kerns beschichtet ist, wobei der Kern Graphitmaterial umfasst und die Beschichtungsschicht Titanniobat, Kohlenstoffnanoröhren und amorphen Kohlenstoff umfasst.

2. Negativelektrodenmaterial aus Graphitverbund nach Anspruch 1, wobei, basierend auf 100 % der Masse des Negativelektrodenmaterials aus Graphitverbund, ein Anteil der Masse der Beschichtungsschicht in einem Bereich von 1 % bis 10 % liegt, ein Anteil der Masse des Titanniobats in einem Bereich von 10 % bis 50 % liegt und ein Anteil der Masse der Kohlenstoffnanoröhren in einem Bereich von 1 % bis 5 % liegt.

3. Negativelektrodenmaterial aus Graphitverbund nach Anspruch 1 oder 2, wobei die chemische Formel des Titanniobats Ti₁₋ₓNbₓO₇, 0<x<1 ist.

4. Verfahren zum Herstellen des Negativelektrodenmaterials aus Graphitverbund nach einem der Ansprüche 1 bis 3, umfassend die folgenden Schritte:
(1) Mischen einer Titanquelle, einer Niobquelle, eines Asphalts und eines Lösungsmittels, Sprühtrocknen und Sintern, um ein Vorbeschichtungsmaterial zu erhalten;
(2) Mischen des Vorbeschichtungsmaterials in Schritt (1) mit einer Lösung eines Metallkatalysators, um ein Gemisch zu erhalten, und Zusammensetzen einer Kohlenstoffquelle mit dem Gemisch mittels Gasphasenabscheidung, um ein Beschichtungsschichtmaterial zu erhalten; und
(3) Mischen des Beschichtungsschichtmaterials in Schritt (2) mit einem Graphitmaterial, Granulieren und Carbonisieren, um das Negativelektrodenmaterial aus Graphitverbund zu erhalten.

5. Verfahren zum Herstellen des Negativelektrodenmaterials aus Graphitverbund nach Anspruch 4, wobei die Titanquelle in Schritt (1) Titandioxid umfasst; die Niobquelle in Schritt (1) ein beliebiges oder eine Kombination von mindestens zwei von Niobpentoxid, Niobtrioxid, Nioboxid und Niobhydroxid umfasst; das Lösungsmittel in Schritt (1) ein beliebiges oder eine Kombination von mindestens zwei von Tetrachlorkohlenstoff, n-Hexan, Xylol, N-Methylpyrrolidon und Tetrahydrofuran umfasst; und ein Massenverhältnis der Titanquelle, der Niobquelle und des Asphalts in Schritt (1) (1-5): (10-50): 100 ist.

6. Verfahren zum Herstellen des Negativelektrodenmaterials aus Graphitverbund nach Anspruch 4 oder 5, wobei das Sintern in Schritt (1) bei einer Temperatur im Bereich von 600 °C bis 1000 °C für einen Zeitraum im Bereich von 1 Stunde bis 6 Stunden durchgeführt wird.

7. Verfahren zum Herstellen des Negativelektrodenmaterials aus Graphitverbund nach einem der Ansprüche 4 bis 6, wobei die mediane Teilchengröße des Metallkatalysators in Schritt (2) in einem Bereich von 10 nm bis 500 nm liegt; der Metallkatalysator in Schritt (2) ein beliebiges oder eine Kombination von mindestens zwei von Nano-Eisen, Nano-Nickel und Nano-Kobalt umfasst; in Schritt (2) das Massenverhältnis des Vorbeschichtungsmaterials zu dem Metallkatalysator 100:(0,5-2) beträgt; das Mischen in Schritt (2) für einen Zeitraum im Bereich von 1 Stunde bis 24 Stunden durchgeführt wird; und anschließend Filtrieren und Vakuumtrocknen der gemischten Substanzen in Schritt (2), um ein Gemisch zu erhalten.

8. Verfahren zum Herstellen des Negativelektrodenmaterials aus Graphitverbund nach einem der Ansprüche 4 bis 7, wobei die Gasphasenabscheidung in Schritt (2) bei einer Temperatur im Bereich von 600 °C bis 1000 °C für einen Zeitraum im Bereich von 1 Stunde bis 12 Stunden durchgeführt wird und die Kohlenstoffquelle zur Gasphasenabscheidung in Schritt (2) ein beliebiges oder eine Kombination von mindestens zwei von Methan, Ethan, Ethylen, Acetylen, Propan und Propylen enthält.

9. Verfahren zum Herstellen des Negativelektrodenmaterials aus Graphitverbund nach einem der Ansprüche 4 bis 8, wobei in Schritt (3) ein Massenverhältnis des Beschichtungsschichtmaterials zu dem Graphitmaterial (1-10): 100 beträgt.

10. Verfahren zum Herstellen des Negativelektrodenmaterials aus Graphitverbund nach einem der Ansprüche 4 bis 9, wobei das Mischen in Schritt (3) für einen Zeitraum im Bereich von 30 Minuten bis 120 Minuten durchgeführt wird.

11. Verfahren zum Herstellen des Negativelektrodenmaterials aus Graphitverbund nach einem der Ansprüche 4 bis 10, wobei das Granulieren in Schritt (3) bei einer Temperatur im Bereich von 600 °C bis 800 °C für einen Zeitraum im Bereich von 1 Stunde bis 6 Stunden durchgeführt wird; und das Carbonisieren in Schritt (3) bei einer Temperatur im Bereich von 1000 °C bis 1300 °C für einen Zeitraum im Bereich von 6 Stunden bis 24 Stunden durchgeführt wird.

12. Verfahren zum Herstellen des Negativelektrodenmaterials aus Graphitverbund nach einem der Ansprüche 4 bis 11, wobei das Verfahren zum Herstellen des Negativelektrodenmaterials aus Graphitverbund die folgenden Schritte umfasst:
(1) Mischen einer Titanquelle, einer Niobquelle und eines Asphalts in einem Massenverhältnis von (1-5):(10-50):100 mit einem Lösungsmittel, Sprühtrocknen und Sintern bei 600 °C bis 1000 °C für 1 Stunde bis 6 Stunden, um ein Vorbeschichtungsmaterial zu erhalten;
(2) Mischen des Vorbeschichtungsmaterials in Schritt (1) mit einer Lösung eines Metallkatalysators mit einer medianen Teilchengröße von 10 nm bis 500 nm in einem Massenverhältnis des Vorbeschichtungsmaterials zu dem Metallkatalysator von 100:(0,5-2) für 1 Stunde bis 24 Stunden, um ein Gemisch zu erhalten, und Kombinieren einer Kohlenstoffquelle mit dem Gemisch bei 600 °C bis 1000 °C für 1 Stunde bis 12 Stunden mittels Gasphasenabscheidung, um ein Beschichtungsschichtmaterial zu erhalten; und
(3) Mischen des Beschichtungsschichtmaterials in Schritt (2) mit einem Graphitmaterial in einem Massenverhältnis von (1-10):100 für 30 Minuten bis 120 Minuten, Granulieren bei 600 °C bis 800 °C für 1 Stunde bis 6 Stunden und Carbonisieren bei einer Carbonisierungstemperatur von 1000 °C bis 1300 °C für 6 Stunden bis 24 Stunden, um das Negativelektrodenmaterial aus Graphitverbund zu erhalten.

13. Lithium-Ionen-Batterie, umfassend das Negativelektrodenmaterial aus Graphitverbund nach einem der Ansprüche 1 bis 3.

## Revendications

1. Matériau d'électrode négative composite en graphite, le matériau d'électrode négative composite en graphite comprend un noyau et une couche de revêtement qui est déposée sur la surface du noyau, le noyau comprend un matériau en graphite, et la couche de revêtement comprend du niobate de titane, des nanotubes de carbone et du carbone amorphe.

2. Matériau d'électrode négative composite en graphite de la revendication 1, dans lequel, sur la base de 100 % de la masse du matériau d'électrode négative composite en graphite, un rapport de la masse de la couche de revêtement est compris dans une plage de 1 % à 10 %, un rapport de la masse du niobate de titane est compris dans une plage de 10 % à 50 %, et un rapport de la masse du nanotube de carbone est compris dans une plage de 1 % à 5 %.

3. Matériau d'électrode négative composite en graphite de l'une des revendications 1 ou 2, dans lequel la formule chimique du niobate de titane est Ti₁₋ₓNbₓO₇, 0<x<1.

4. Procédé permettant la préparation du matériau d'électrode négative composite en graphite de l'une quelconque des revendications 1 à 3, comprenant les étapes suivantes :
(1) mélange d'une source de titane, d'une source de niobium, d'un asphalte et d'un solvant, séchage par pulvérisation et frittage pour obtenir un matériau de pré-revêtement ;
(2) mélange du matériau de pré-revêtement de l'étape (1) avec une solution d'un catalyseur métallique pour obtenir un mélange, et incorporation d'une source de carbone au mélange par dépôt en phase vapeur pour obtenir un matériau de couche de revêtement ; et
(3) mélange du matériau de couche de revêtement de l'étape (2) avec un matériau de graphite, granulation et carbonisation pour obtenir le matériau d'électrode négative composite en graphite.

5. Procédé permettant la préparation du matériau d'électrode négative composite en graphite de la revendication 4, dans lequel la source de titane à l'étape (1) comprend du dioxyde de titane ; la source de niobium à l'étape (1) comprend l'un quelconque ou une combinaison d'au moins deux parmi le pentoxyde de niobium, le trioxyde de niobium, l'oxyde de niobium et l'hydroxyde de niobium ; le solvant à l'étape (1) comprend l'un quelconque ou une combinaison d'au moins deux parmi le tétrachlorure de carbone, le n-hexane, le xylène, la N-méthylpyrrolidone et le tétrahydrofurane ; et un rapport massique de la source de titane, de la source de niobium et de l'asphalte à l'étape (1) est (1-5):(10-50):100.

6. Procédé permettant la préparation du matériau d'électrode négative composite en graphite de l'une des revendications 4 ou 5, dans lequel le frittage à l'étape (1) est effectué à une température comprise entre 600 °C et 1000 °C pendant une période comprise entre 1 heure et 6 heures.

7. Procédé permettant la préparation du matériau d'électrode négative composite en graphite de l'une quelconque des revendications 4 à 6, dans lequel la taille moyenne des particules du catalyseur métallique à l'étape (2) est comprise dans une plage de 10 nm à 500 nm ; le catalyseur métallique à l'étape (2) comprend l'un quelconque ou une combinaison d'au moins deux parmi le fer nanométrique, le nickel nanométrique et le cobalt nanométrique ; à l'étape (2), le rapport massique du matériau de pré-revêtement au catalyseur métallique est de 100:(0,5-2) ; le mélange à l'étape (2) est effectué pendant une période allant de 1 heure à 24 heures ; puis filtration et séchage sous vide des substances mélangées à l'étape (2) pour obtenir un mélange.

8. Procédé permettant la préparation du matériau d'électrode négative composite en graphite de l'une quelconque des revendications 4 à 7, dans lequel le dépôt en phase vapeur à l'étape (2) est effectué à une température allant de 600 °C à 1000 °C pendant une période allant de 1 heure à 12 heures, et la source de carbone destinée au dépôt en phase vapeur à l'étape (2) comprend l'un quelconque ou une combinaison d'au moins deux parmi le méthane, l'éthane, l'éthylène, l'acétylène, le propane et le propylène.

9. Procédé permettant la préparation du matériau d'électrode négative composite en graphite de l'une quelconque des revendications 4 à 8, dans lequel, à l'étape (3), un rapport massique du matériau de couche de revêtement au matériau en graphite est de (1-10):100.

10. Procédé permettant la préparation du matériau d'électrode négative composite en graphite de l'une quelconque des revendications 4 à 9, dans lequel le mélange à l'étape (3) est effectué pendant une période allant de 30 minutes à 120 minutes.

11. Procédé permettant la préparation du matériau d'électrode négative composite en graphite de l'une quelconque des revendications 4 à 10, dans lequel la granulation à l'étape (3) est effectuée à une température allant de 600 °C à 800 °C pendant une période allant de 1 heure à 6 heures ; et la carbonisation à l'étape (3) est effectuée à une température allant de 1000 °C à 1300 °C pendant une période allant de 6 heures à 24 heures.

12. Procédé permettant la préparation du matériau d'électrode négative composite en graphite de l'une quelconque des revendications 4 à 11, dans lequel le procédé permettant la préparation du matériau d'électrode négative composite en graphite comprend les étapes suivantes :
(1) mélange d'une source de titane, d'une source de niobium et d'un asphalte selon un rapport massique de (1-5):(10-50):100 avec un solvant, séchage par pulvérisation et frittage à 600 °C à 1000 °C pendant 1 heure à 6 heures pour obtenir un matériau de pré-revêtement ;
(2) mélange du matériau de pré-revêtement de l'étape (1) avec une solution d'un catalyseur métallique présentant une taille moyenne des particules de 10 nm à 500 nm selon un rapport massique du matériau de pré-revêtement au catalyseur métallique de 100:(0,5-2) pendant 1 heure à 24 heures pour obtenir un mélange, et incorporation d'une source de carbone au mélange à 600 °C à 1000 °C pendant 1 heure à 12 heures par dépôt en phase vapeur pour obtenir un matériau de couche de revêtement ; et
(3) mélange du matériau de couche de revêtement de l'étape (2) avec un matériau de graphite selon un rapport massique de (1-10):100 pendant 30 minutes à 120 minutes, granulation à 600 °C à 800 °C pendant 1 heure à 6 heures, et carbonisation à une température de carbonisation de 1000 °C à 1300 °C pendant 6 heures à 24 heures pour obtenir le matériau d'électrode négative composite en graphite.

13. Batterie lithium-ion, comprenant le matériau d'électrode négative composite en graphite de l'une quelconque des revendications 1 à 3.
